# EUROPEAN PATENT APPLICATION

(11) **EP 4 826 781 A1**
(43) Date of publication of application: **21.10.2026**
(21) Application number: 26158914.7
(22) Date of filing: 17.02.2026
(51) Int. Cl.: H01M 4/136, H01M 10/0562

(54) **SOLID ELECTROLYTE LAYER AND SOLID-STATE BATTERY**

(30) Priority: 16.04.2025 JP 2025067457
(71) Applicant: Toyota Jidosha Kabushiki Kaisha, Toyota-shi, Aichi-ken 471-8571 (JP)
(72) Inventor: AOYAMA, Yoshinori, TOYOTA-SHI, AICHI-KEN, 471-8571 (JP); ASAKURA, Ryo, TOYOTA-SHI, AICHI-KEN, 471-8571 (JP); SHIOTANI, Shinya, TOYOTA-SHI, AICHI-KEN, 471-8571 (JP); NOZAKI, Hiroo, TOYOTA-SHI, AICHI-KEN, 471-8571 (JP)
(74) Representative: Cabinet Beau de Loménie

(57) **Abstract**

A solid electrolyte layer includes a first layer (110) and a second layer (120) laminated on the first layer (110). The first layer (110) includes an outer peripheral region (112) and a central region (114) located inward of the outer peripheral region (112) in a plane direction. A reduction resistance of the second layer (120) is higher than a reduction resistance of the outer peripheral region (112) and a reduction resistance of the central region (114) in the first layer (110). An elongation of the outer peripheral region (112) of the first layer (110) at a yield point is greater than an elongation of the central region (114) of the first layer (110) at a yield point and an elongation of the second layer (120) at a yield point. An ionic conductivity of the central region (114) of the first layer (110) is greater than an ionic conductivity of the outer peripheral region (112) of the first layer (110) and an ionic conductivity of the second layer (120).

## Description

### BACKGROUND OF THE INVENTION

### 1. Field of the Invention

The present disclosure relates to a solid electrolyte layer and a solid-state battery including the solid electrolyte layer.

### 2. Description of Related Art

Solid-state batteries are secondary batteries that contain a solid electrolyte as an electrolyte, and have attracted attention because they have higher performance in terms of charging performance etc. compared to liquid-based batteries that use only a liquid electrolyte as an electrolyte. Various proposals have been made to improve the performance and quality of such solid-state batteries.

For example, Japanese Unexamined Patent Application Publication No. 2023-009988 (JP 2023-009988 A) discloses an all-solid-state battery including a first electrode layer, a first solid electrolyte layer, a second solid electrolyte layer, and a second electrode layer in the stated order. The first solid electrolyte layer has a first surface. The second solid electrolyte layer has a second surface in contact with the first surface. A maximum height Rz1 of the first surface and a maximum height Rz2 of the second surface satisfy a relationship of 0.15 ≤ Rz1/Rz2 ≤ 0.25. JP 2023-009988 A describes that, with such an all-solid-state battery, even if a crack is generated in one of the first solid electrolyte layer and the second solid electrolyte layer, propagation of the crack to the other layer can be suppressed easily and excellent short-circuit resistance can be ensured easily.

### SUMMARY OF THE INVENTION

The present disclosure provides a novel solid electrolyte in which one or more of the properties required in a solid electrolyte layer can be improved, and a solid-state battery including such a solid electrolyte layer.

The present disclosure achieves the above object by the following means.

### First Aspect

A solid electrolyte layer including a first layer and a second layer laminated on the first layer, in which:
the first layer includes an outer peripheral region and a central region located inward of the outer peripheral region in a plane direction;
a reduction resistance of the second layer is higher than a reduction resistance of the outer peripheral region and a reduction resistance of the central region in the first layer;
an elongation of the outer peripheral region of the first layer at a yield point is greater than an elongation of the central region of the first layer at a yield point and an elongation of the second layer at a yield point; and
an ionic conductivity of the central region of the first layer is greater than an ionic conductivity of the outer peripheral region of the first layer and an ionic conductivity of the second layer.

### Second Aspect

The solid electrolyte layer according to the first aspect, in which the elongation of the second layer at the yield point is greater than the elongation of the central region of the first layer at the yield point.

### Third Aspect

The solid electrolyte layer according to the first or second aspect, in which the ionic conductivity of the second layer is greater than the ionic conductivity of the outer peripheral region of the first layer.

### Fourth Aspect

A solid-state battery including a cathode current collector layer, a cathode active material layer, the solid electrolyte layer according to any one of the first to third aspects, and an anode current collector layer in the stated order.

### Fifth Aspect

The solid-state battery according to the fourth aspect, in which:
the cathode active material layer is a sulfur-based cathode active material layer; and
the solid electrolyte layer is disposed such that the first layer of the solid electrolyte layer faces the cathode active material layer and the second layer of the solid electrolyte layer faces the anode current collector layer.

With the solid electrolyte layer of the present disclosure, one or more of the properties required in a solid electrolyte layer can be improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1A is a conceptual perspective view illustrating one aspect of a solid electrolyte layer of the present disclosure;
FIG. 1B is a conceptual top view illustrating the one aspect of the solid electrolyte layer of the present disclosure;
FIG. 1C is a conceptual bottom view illustrating the one aspect of the solid electrolyte layer of the present disclosure;
FIG. 2A is a conceptual top view illustrating another aspect of the solid electrolyte layer of the present disclosure;
FIG. 2B is a conceptual top view illustrating another aspect of the solid electrolyte layer of the present disclosure;
FIG. 2C is a conceptual top view illustrating another aspect of the solid electrolyte layer of the present disclosure;
FIG. 2D is a conceptual top view illustrating another aspect of the solid electrolyte layer of the present disclosure;
FIG. 3 is a conceptual sectional view of a solid-state battery of the present disclosure;
FIG. 4 is a conceptual top view showing modes of deformation of a solid electrolyte layer;
FIG. 5A is a conceptual perspective view illustrating another aspect of a solid electrolyte layer other than that of the present disclosure;
FIG. 5B is a conceptual top view illustrating the other aspect of the solid electrolyte layer other than that of the present disclosure;
FIG. 5C is a conceptual bottom view illustrating the other aspect of the solid electrolyte layer other than that of the present disclosure;
FIG. 6A is a conceptual perspective view illustrating another aspect of the solid electrolyte layer other than that of the present disclosure;
FIG. 6B is a conceptual top view illustrating the other aspect of the solid electrolyte layer other than that of the present disclosure; and
FIG. 6C is a conceptual bottom view illustrating the other aspect of the solid electrolyte layer other than that of the present disclosure.

### DETAILED DESCRIPTION OF EMBODIMENTS

Hereinafter, an embodiment of the present disclosure will be described in detail. The present disclosure is not limited to the following embodiment, and various modifications may be made without departing from the scope of the present disclosure.

### Solid Electrolyte Layer

The solid electrolyte layer of the present disclosure includes a first layer and a second layer laminated on the first layer.

The first layer includes an outer peripheral region and a central region located inward of the outer peripheral region in a plane direction.

A reduction resistance of the second layer is higher than a reduction resistance of the outer peripheral region and a reduction resistance of the central region in the first layer.

An elongation of the outer peripheral region of the first layer at a yield point is greater than an elongation of the central region of the first layer at a yield point and an elongation of the second layer at a yield point.

An ionic conductivity of the central region of the first layer is greater than an ionic conductivity of the outer peripheral region of the first layer and an ionic conductivity of the second layer.

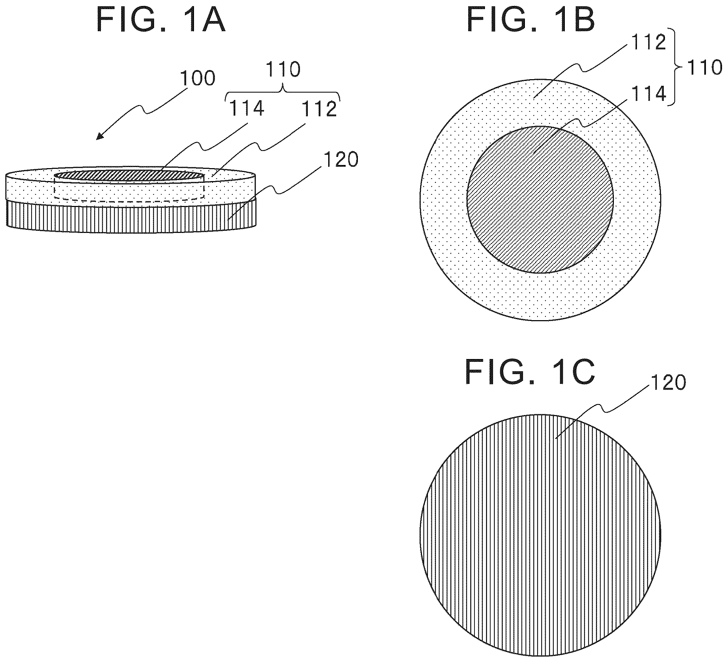

That is, as illustrated in FIGS. 1A, 1B, and 1C, a solid electrolyte layer 100 of the present disclosure includes a first layer 110 and a second layer 120 laminated on the first layer 110. The first layer 110 includes an outer peripheral region 112 and a central region 114 located inward of the outer peripheral region in a plane direction.

When used in a solid-state battery, the solid electrolyte layer receives a relatively large reduction voltage in the vicinity of a surface that faces an anode current collector layer. Such a reduction voltage may decompose and deteriorate the solid electrolyte constituting the solid electrolyte layer.

In the solid electrolyte layer of the present disclosure, the reduction resistance of the second layer is greater than the reduction resistances of the outer peripheral region and the central region of the first layer. Therefore, when the second layer is disposed to face the anode current collector layer, the decomposition and deterioration of the solid electrolyte of the second layer by the reduction voltage can be suppressed.

When used in a solid-state battery, the solid electrolyte layer is generally subjected to a large pressure in the laminating direction to improve contact between the active material and the solid electrolyte contained in the solid-state battery. In such a case, the pressure may cause the solid electrolyte layer to expand in the plane direction. When the expansion or contraction of the active material layer in the plane direction is relatively large, for example, when a sulfur-based cathode active material is used as the cathode active material, the expansion or contraction of the active material layer during charging and discharging may cause the adjacent solid electrolyte layer to expand or contract in the plane direction.

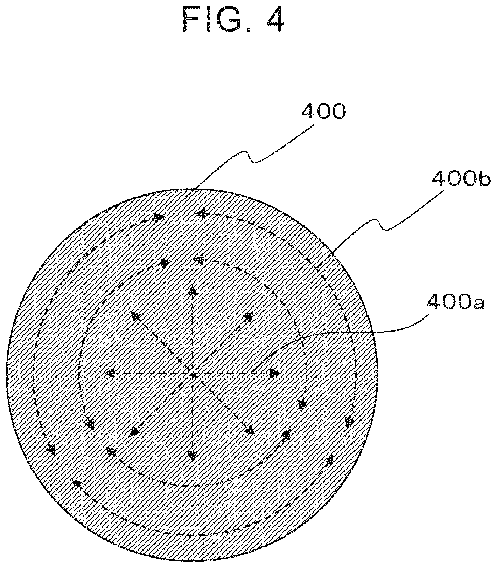

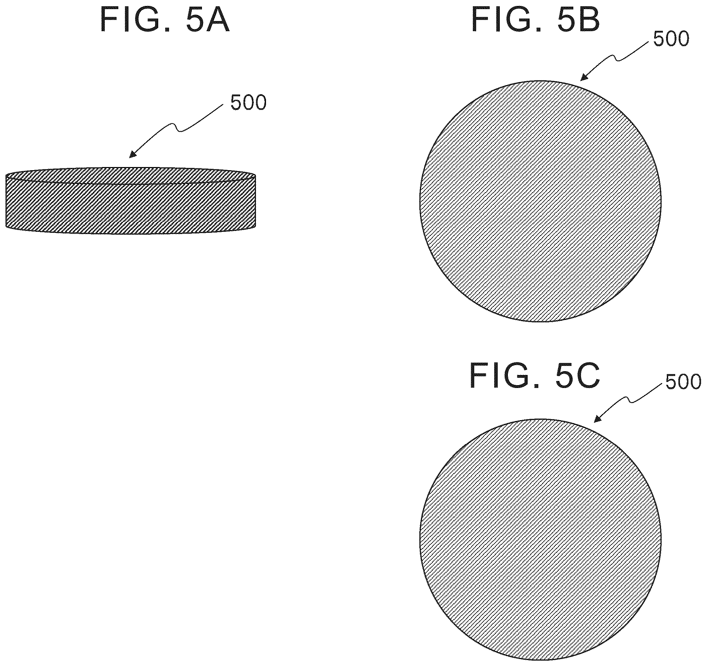

When the solid electrolyte layer expands in the plane direction in this manner, as shown in FIG. 4, the central region of a solid electrolyte layer 400 is dominated by a deformation mode 400a in which it expands in a radial direction, and the outer peripheral region is dominated by a deformation mode 400b in which it is pushed out in a circumferential direction. Such deformation may cause radial cracks in the outer peripheral region in a solid electrolyte layer 500 other than that of the present disclosure, in which the outer peripheral region and the central region are uniform as shown in FIGS. 5A, 5B, and 5C.

To suppress such cracks in the outer peripheral region, it is conceivable to form the solid electrolyte layer 500 using a flexible solid electrolyte composite. In this case, however, such a solid electrolyte composite often has a low ionic conductivity. Therefore, it has been difficult to simultaneously suppress the radial cracks in the outer peripheral region and ensure a good ionic conductivity in the solid electrolyte layer.

In the solid electrolyte layer of the present disclosure, the elongation of the outer peripheral region of the first layer at the yield point is greater than the elongation of the central region of the first layer at the yield point and the elongation of the second layer at the yield point. Thus, the cracks in the outer peripheral region can be suppressed. In the solid electrolyte layer of the present disclosure, the ionic conductivity of the central region of the first layer is greater than the ionic conductivity of the outer peripheral region of the first layer and the ionic conductivity of the second layer. Thus, the ionic conductivity of the solid electrolyte layer can be increased.

In one aspect, in the solid electrolyte layer of the present disclosure, the elongation of the second layer at the yield point is greater than the elongation of the central region of the first layer at the yield point. Thus, it is possible to suppress the cracks in the second layer, particularly in the outer peripheral region of the second layer.

In one aspect, in the solid electrolyte layer of the present disclosure, the ionic conductivity of the second layer is greater than the ionic conductivity of the outer peripheral region of the first layer. Thus, the ionic conductivity of the solid electrolyte layer can be increased.

In the present disclosure, the "outer peripheral region" refers to a region on the outer peripheral side of the solid electrolyte layer. For example, when the longest diameter of the solid electrolyte layer in the plane direction is the reference, the "outer peripheral region" may be a region that is present with a width of 40% or less, 30% or less, 20% or less, or 10% or less of the longest diameter from the outer peripheral edge, or may be a region that is present with a width of 5% or more, 10% or more, 20% or more, 30% or more, or 35% or more of the longest diameter from the outer peripheral edge.

When the solid electrolyte layer of the present disclosure has a rectangular or square shape in the plane direction, the outer peripheral region along the long side may be a region that is present with a width of 40% or less, 30% or less, 20% or less, or 10% or less of the length of the short side from the long side. The outer peripheral region along the long side may be a region that is present with a width of 5% or more, 10% or more, 20% or more, 30% or more, or 35% or more of the length of the short side from the long side.

In this case, the outer peripheral region along the short side may be a region that is present with a width of 40% or less, 30% or less, 20% or less, or 10% or less of the length of the long side from the short side. The outer peripheral region along the short side may be a region that is present with a width of 5% or more, 10% or more, 20% or more, 30% or more, or 35% or more of the length of the long side from the short side.

When the solid electrolyte layer of the present disclosure has a circular or elliptical shape in the plane direction, the outer peripheral region along the outer periphery may be a region that is present with a width of 40% or less, 30% or less, 20% or less, or 10% or less of the length of the radius (or minor radius or major radius) from the outer periphery. The outer peripheral region along the outer periphery may be a region that is present with a width of 5% or more, 10% or more, 20% or more, 30% or more, or 35% or more of the radius from the outer periphery.

The area of the "outer peripheral region" may be, for example, 5 area% or more, 10 area% or more, 20 area% or more, 30 area% or more, 40 area% or more, or 50 area% or more of the area of the solid electrolyte layer in the plane direction, and may be 60 area% or less, 50 area% or less, 40 area% or less, 30 area% or less, or 20 area% or less.

In the present disclosure, the "central region" refers to a region located inward of the outer peripheral region in the plane direction.

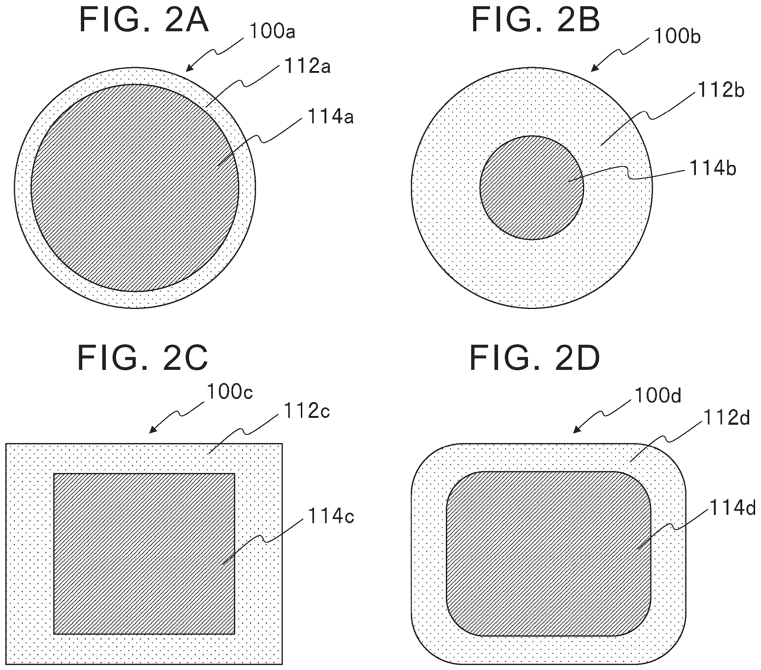

In the present disclosure, the "solid electrolyte layer" may have any shape in the plane direction, such as a circle (FIGS. 2A and 2B), an ellipse, a rectangle (FIG. 2C), a square, a rounded rectangle (FIG. 2D), or a rounded square. As described above, the size of the "outer peripheral region" and the size of the "central region" can be selected optionally. Therefore, in the plane direction, the area of the outer peripheral region may be small as shown in FIG. 2A or large as shown in FIG. 2B. In FIGS. 2A, 2B, 2C, and 2D, solid electrolyte layers 100a, 100b, 100c, and 100d of the present disclosure include outer peripheral regions 112a, 112b, 112c, 112d of the first layers, and central regions 114a, 114b, 114c, 114d located inward of the outer peripheral regions in the plane direction, respectively.

In the present disclosure, the "elongation at yield point" in each portion of the solid electrolyte layer refers to an elongation value of a test sample of each portion when a tensile test is carried out on the test sample and the test sample reaches the yield point. Therefore, the magnitude of the "elongation at yield point" in the solid electrolyte layer indicates the resistance to cracking when a tensile stress is applied.

Specifically, in the present disclosure, the "elongation at yield point" can be evaluated as follows:
The solid electrolyte layer was cut into strips of 5 mm × 20 mm using a cutter, and two of them were attached together and transferred using a uniaxial press at 84 kN to prepare a test sample. The test sample is set in a jig of a tension/compression testing machine (microautograph) with a gauge length of 20 mm, a tensile test is carried out at a tensile speed of 5 mm/min until the test sample reaches the yield point, and the elongation value of the test sample when the test sample reaches the yield point is measured. To suppress deterioration of the solid electrolyte due to moisture, the test can be completed within 5 minutes in a dry room environment with a dew point of -45°C or less.

In the present disclosure, the "ionic conductivity" of the solid electrolyte layer refers to a value obtained by performing ionic conductivity measurement on a test sample of each portion of the solid electrolyte layer. The ions subjected to the ionic conductivity measurement are ions that are used as carrier ions in a solid-state battery that is intended to use the solid electrolyte of the present disclosure. Thus, when the solid electrolyte of the present disclosure is intended for use in a lithium-ion battery, the ions subjected to the ionic conductivity measurement are lithium ions.

Specifically, in the present disclosure, the "ionic conductivity" can be evaluated as follows:
A material for the solid electrolyte layer is weighed at 100 mg, placed in Macor having a diameter of 11.28 mm, and pressed at a pressure of about 10 kN. Then, carbon-coated aluminum foils are disposed on both sides of the solid electrolyte layer, and the layers are pressed at 42 kN and bound to a fixed size at a binding pressure of 6 Nm to prepare a pellet cell. Subsequently, the resistance value is measured by an AC impedance method, and the ionic conductivity is calculated. When an arc component is observed in Nyquist plots at the time of reading the resistance value, the resistance value at a frequency at which Imaginary Z on a low frequency side of a first arc component is minimized is read as a resistance value R (Ω). When no arc component is observed in Nyquist plots, the resistance value at a frequency of 100 kHz is read as the resistance value R (Ω). A resistivity ρ is calculated from the resistance value R (Ω) read in the above procedure and the dimensions of the evaluated solid electrolyte layer, and the ionic conductivity is calculated from the reciprocal of the resistivity ρ.

In the present disclosure, the "reduction resistance" of the solid electrolyte layer is an index of the resistance of the solid electrolyte contained in each test sample of each portion of the solid electrolyte layer to decomposition and deterioration when a reduction voltage is applied to the test sample. The "reduction resistance" can be examined as the magnitude of a reduction potential at which the solid electrolyte contained in the test sample in each region starts to decompose and deteriorate by applying the reduction voltage to the test sample.

In the present disclosure, the "elongation at yield point," the "ionic conductivity," and the "reduction resistance" of the solid electrolyte layer can be adjusted by adjusting the types and amounts of materials used in the solid electrolyte layer, particularly the type and amount of the solid electrolyte and the type and amount of the binder.

In this regard, for example, to increase the "elongation at yield point" in the solid electrolyte layer, a solid electrolyte with high elasticity can be used as the solid electrolyte to be used in the solid electrolyte layer, a binder with high elasticity can be used as the binder to be used in the solid electrolyte layer, or the amount of the binder to be used in the solid electrolyte layer can be increased. Examples of the solid electrolyte with a large "elongation at yield point" include a thio-LISICON solid electrolyte containing LiI.

For example, to increase the "ionic conductivity" of the solid electrolyte layer, a solid electrolyte with a high ionic conductivity can be used as the solid electrolyte to be used in the solid electrolyte layer, and the amount of the binder to be used in the solid electrolyte layer can be reduced. Examples of the solid electrolyte with a high "ionic conductivity" include Li₁₀GeP₂S₁₂.

For example, to increase the "reduction resistance" of the solid electrolyte layer, a solid electrolyte with a high reduction resistance can be used as the solid electrolyte to be used in the solid electrolyte layer. Examples of the solid electrolyte with a high "reduction resistance" include an argyrodite solid electrolyte containing LiCl and LiBr and a thio-LISICON solid electrolyte containing LiI, particularly the argyrodite solid electrolyte containing LiCl and LiBr.

The shape of the solid electrolyte layer is not particularly limited, but may be, for example, a sheet shape having a substantially flat surface. The thickness of the solid electrolyte layer is not particularly limited, but may be, for example, 0.1 µm or more, 1 µm or more, or 10 µm or more, and may be 2 mm or less, 1 mm or less, or 500 µm or less.

### Solid Electrolyte

The solid electrolyte used in the solid electrolyte layer of the present disclosure may be an inorganic solid electrolyte or an organic polymer electrolyte. In particular, the inorganic solid electrolyte is excellent in ionic conductivity and heat resistance. Examples of the inorganic solid electrolyte include an oxide solid electrolyte, a sulfide solid electrolyte, and an ionic inorganic solid electrolyte. Among the inorganic solid electrolytes, sulfide solid electrolytes, and among them, sulfide solid electrolytes containing at least Li, S, and P as constituent elements, have high performance. Alternatively, among the inorganic solid electrolytes, ionic solid electrolytes, and among them, solid electrolytes containing at least Li, Y, and a halogen (at least one of Cl, Br, I, and F) as constituent elements, have high performance. The solid electrolyte may be amorphous or crystalline.

The particle size of the solid electrolyte may be 1.0 µm or less, 0.9 µm or less, 0.8 µm or less, 0.7 µm or less, or 0.5 µm or less, and may be 0.1 µm or more, 0.2 µm or more, or 0.3 µm or more. The particle size of the solid electrolyte is defined as the particle size (median size) corresponding to 50% of the volume-based cumulative particle size distribution as determined by a laser diffraction and scattering method.

The oxide solid electrolyte may be one or more selected from lithium lanthanum zirconate, LiPON, Li_{1+X}Al_{X}Ge_{2-X}(PO₄)₃, Li-SiO glass, and Li-Al-S-O glass. When the oxide solid electrolyte is combined with a liquid electrolyte, the ionic conductivity can be improved.

The sulfide solid electrolyte may contain, for example, Li, an X element (X is at least one of P, As, Sb, Si, Ge, Sn, B, Al, Ga, and In), and S. The sulfide solid electrolyte may further contain at least one of O and a halogen element. The sulfide solid electrolyte may contain S as a main component of an anionic element.

The sulfide solid electrolyte may be at least one selected from, for example, Li₂S-P₂S₅, Li₂S-P₂S₃-LiI, Li₂S-P₂S₅-GeS₂, Li₂S-P₂S₅-Li₂O, Li₂S-P₂S₅-Li₂O-LiO, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numerals, and Z is any one of Ge, Zn, and Ga), Li₂S-GeS₂, Li₂S-SiS₂-Li₃PO₄, or Li₂S-SiS₂-LiₓMO_{y} (where x and y are positive numerals, and M is any one of P, Si, Ge, B, Al, Ga, and In).

In the solid electrolyte layer of the present disclosure, at least part of the solid electrolyte may be self-formed during initial charging of a solid-state battery including the solid electrolyte layer. That is, the solid electrolyte layer of the present disclosure contains a phosphorus-containing sulfide such as P₂S₅ before the initial charging, and the phosphorus-containing sulfide can at least partially react with lithium during the initial charging to form the sulfide solid electrolyte as described above. The solid electrolyte that is self-formed in this manner during the initial charging is preferable because it can provide an appropriate ion-conducting network.

The phosphorus-containing sulfide contains at least phosphorus and sulfur as constituent elements, and may further contain other elements. Examples of the other elements include one or more of Ge, Sn, Si, B, and Al. The phosphorus-containing sulfide may contain phosphorus and sulfur as constituent elements, as well as the other elements described above, but need not contain lithium. Examples of the phosphorus-containing sulfide include P₂S₅. The phosphorus-containing sulfide may have an ortho structure of phosphorus (PS₄ structure). The shape of the phosphorus-containing sulfide is not particularly limited, but may be, for example, particulate.

The content of the solid electrolyte in each portion of the solid electrolyte layer is not particularly limited, but may be determined as appropriate depending on the performance required in the solid electrolyte layer, etc. The content of the solid electrolyte may be, for example, 1% by mass or more, 5% by mass or more, 10% by mass or more, 15% by mass or more, or 20% by mass or more, and may be 95% by mass or less, 90% by mass or less, 80% by mass or less, 70% by mass or less, 60% by mass or less, or 50% by mass or less with respect to the solid electrolyte layer.

### Resin Binder

Each portion of the solid electrolyte layer optionally contains a resin binder in addition to the solid electrolyte described above.

The resin binder used is not particularly limited, but may be one or more selected from, for example, butadiene rubber, butylene rubber, acrylonitrile butadiene rubber, acrylate butadiene rubber, styrene butadiene rubber, polyvinylidene fluoride, polytetrafluoroethylene, and polyimide.

In each portion of the solid electrolyte layer, the content of the resin binder may be 0.1% by mass or more and 15% by mass or less. When the solid electrolyte layer contains a large amount of the resin binder, the flexibility of the solid electrolyte layer increases, but the ionic conductivity decreases. The content may be 0.1% by mass or more, 0.5% by mass or more, 1% by mass or more, 3% by mass or more, 5% by mass or more, 6% by mass or more, 7% by mass or more, 8% by mass or more, 9% by mass or more, or 10% by mass or more, and may be 15% by mass or less, 14% by mass or less, 13% by mass or less, 12% by mass or less, or 11% by mass or less.

### Method for Producing Solid Electrolyte Layer

The solid electrolyte layer can be formed, for example, by molding a solid electrolyte composite containing the solid electrolyte and the resin binder described above by a dry or wet method.

### Solid-state Battery

The solid-state battery of the present disclosure includes a cathode current collector layer, a cathode active material layer, the solid electrolyte layer of the present disclosure, and an anode current collector layer in the stated order.

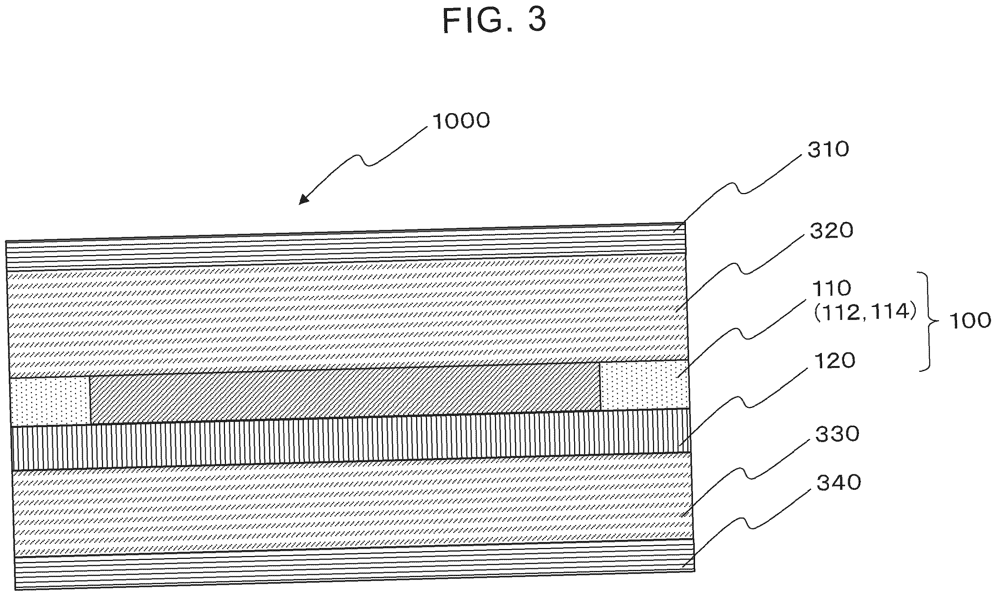

That is, as illustrated in FIG. 3, a solid-state battery 1000 of the present disclosure includes a cathode current collector layer 310, a cathode active material layer 320, the solid electrolyte layer 100 of the present disclosure, an optional anode active material layer 330, and an anode current collector layer 340 in the stated order.

In the solid-state battery of the present disclosure, without using the anode active material layer 330, carrier ions can be dissolved and precipitated at this position. That is, for example, when the carrier ions are lithium ions, during discharging of the solid-state battery, metallic lithium in a metallic lithium layer between the solid electrolyte layer and the anode current collector layer is ionized into lithium ions, which are then passed through the solid electrolyte layer and stored in the cathode active material layer. During charging of the solid-state battery, lithium ions are released from the cathode active material layer, and metallic lithium is precipitated between the solid electrolyte layer and the anode current collector layer to form a metallic lithium layer.

The solid-state battery of the present disclosure may be, for example, a solid-state battery that uses lithium as the carrier ion, namely a solid-state lithium battery, or a solid-state battery that uses sodium as the carrier ion, namely a solid-state sodium battery.

With the solid-state battery of the present disclosure, the effects of the solid electrolyte layer of the present disclosure can be obtained.

In the present disclosure, the "solid-state battery" refers to a battery that uses at least a solid electrolyte as the electrolyte. Accordingly, the solid-state battery may use a combination of a solid electrolyte and a liquid electrolyte as the electrolyte. In the present disclosure, the "solid-state battery" may be an all-solid-state battery, namely a battery that uses only a solid electrolyte as the electrolyte.

In one aspect,
the cathode active material layer is a sulfur-based cathode active material layer, and
the solid electrolyte layer is disposed such that the first layer of the solid electrolyte layer faces the cathode active material layer and the second layer of the solid electrolyte layer faces the anode current collector layer.

As described above about the solid electrolyte layer of the present disclosure, when the expansion or contraction of the active material layer is relatively large, for example, when a sulfur-based cathode active material is used as the cathode active material, the expansion or contraction of the active material layer during charging and discharging may cause the adjacent solid electrolyte layer to expand or contract in the plane direction, which may cause cracks in the solid electrolyte layer.

In the solid-state battery of the present disclosure as described above, the solid electrolyte layer is disposed such that the first layer of the solid electrolyte layer that has a relatively large elongation at the yield point faces the sulfur-based cathode active material layer, namely the active material layer that expands or contracts greatly during charging and discharging. Thus, it is possible to suppress cracking of the solid electrolyte layer in the portion of the solid electrolyte layer near the cathode active material layer.

### Cathode Current Collector Layer

The shape of the cathode current collector layer used in the solid-state battery of the present disclosure is not particularly limited, but may be, for example, a foil or plate shape. The cathode current collector layer may be composed of a plurality of foils or layers. The cathode current collector layer may have a metal foil, or may have a layer made of a resin composition containing a resin and a conductive aid.

Examples of metals for the metal foil include at least one selected from Cu, Ni, Cr, Au, Pt, Ag, Al, Fe, Ti, Zn, Co, V, Mg, Pb, Ge, In, Sn, Zr, and stainless steel. In particular, Al is preferably contained from the viewpoint of ensuring oxidation resistance etc. The cathode current collector layer may also be formed by plating or depositing, by vapor deposition, any of the above-mentioned metals onto a metal foil or a substrate.

The thickness of the cathode current collector layer is not particularly limited, but may be 0.1 µm or more, or 1 µm or more, and may be 1 mm or less, or 100 µm or less.

### Cathode Active Material Layer

The cathode active material layer used in the solid-state battery of the present disclosure includes a cathode active material, a solid electrolyte, and a resin binder that bonds them together. The cathode active material layer may further contain other active materials, conductive aids, etc. As the cathode active material, any cathode active material can be used. For example, an oxide-based cathode active material such as a nickel-manganese-cobalt composite oxide or a sulfur-based active material, particularly the sulfur-based active material, can be used.

The shape of the cathode active material layer is not particularly limited, but may be, for example, a sheet shape having a substantially flat surface. The thickness of the cathode active material layer is not particularly limited, but may be, for example, 0.1 µm or more, 1 µm or more, or 10 µm or more, and may be 2 mm or less, 1 mm or less, or 500 µm or less.

### Sulfur-based Active Material

The sulfur-based active material contained in the cathode active material layer may be any material that reacts with lithium ions that are charge compensation ions during discharging to produce a compound containing sulfur and lithium (e.g., a sulfide such as Li₂S) as a discharge product, and releases lithium ions during charging. The cathode active material layer containing such a sulfur-based cathode active material generally expands or contracts greatly in the plane direction during charging and discharging, and therefore can be preferably used in combination with the solid electrolyte layer of the present disclosure.

The sulfur-based active material may contain elemental sulfur or may be composed of elemental sulfur. The elemental sulfur may be octasulfur (S₈) or any other sulfur. Octasulfur (S₈) may be α-sulfur, β-sulfur, γ-sulfur, or a combination thereof.

The sulfur-based active material may be dissolved in the solid electrolyte or may be chemically bonded to the solid electrolyte. For example, when the solid electrolyte is a phosphorus-containing sulfide such as diphosphorus pentasulfide (P₂S₅), the sulfur in the sulfur-based active material and the sulfur in the phosphorus-containing sulfide may be chemically bonded to each other.

The shape of the sulfur-based active material is not particularly limited, but may be, for example, particulate. The particle size of the sulfur-based active material may be, for example, 1 nm or more, 5 nm or more, or 10 nm or more, and may be 500 µm or less, 100 µm or less, 50 µm or less, or 30 µm or less. The particle size of the cathode active material is defined as the particle size (median size) corresponding to 50% of the volume-based cumulative particle size distribution as determined by a laser diffraction and scattering method.

The content of the sulfur-based active material in the cathode active material layer may be determined as appropriate depending on intended battery performance. For example, the content of the sulfur-based active material in the cathode active material layer may be 10% by mass or more, 20% by mass or more, 30% by mass or more, 40% by mass or more, 50% by mass or more, or 60% by mass or more, and may be 100% by mass or less, or 90% by mass or less.

### Solid Electrolyte

For the solid electrolyte, reference can be made to the description of the solid electrolyte layer of the present disclosure.

### Resin Binder

For the resin binder, reference can be made to the description of the solid electrolyte layer of the present disclosure.

### Conductive Aid

The conductive aid is not particularly limited, but may be, for example, carbon. Carbon may be one or more of, for example, carbon nanotubes, vapor grown carbon fibers (VGCFs), acetylene black, furnace black, ketjen black, activated carbon, and graphene. In particular, when the cathode active material layer contains carbon nanotubes, high performance can be easily ensured as the battery. Examples of other conductive aids include one or more conductive aids made of various metal materials. The conductive aid may be, for example, in the form of particles or fibers, and its size is not particularly limited.

### Method for Producing Cathode Active Material Layer

The cathode active material layer can be produced by applying a known method. For example, the cathode active material layer can be formed by molding a cathode composite containing the above various components by a dry or wet method. The cathode active material layer may be molded together with the cathode current collector layer, or may be molded separately from the cathode current collector layer.

### Anode Active Material Layer or Metallic Lithium Layer

The anode active material layer used in the solid-state battery of the present disclosure can include an anode active material, a solid electrolyte, and a resin binder that bonds them together. The anode active material layer may further contain other active materials, conductive aids, etc.

The anode active material may be not only carbon but also an alloy-based anode active material such as silicon.

In the solid-state battery of the present disclosure, a metallic lithium layer made of metallic lithium can be used instead of the anode active material layer. In this case, during charging, lithium ions that have migrated from the cathode active material layer receive electrons and are precipitated as metallic lithium between the solid electrolyte layer and the anode current collector layer to form a metallic lithium layer. During discharging, the lithium between the solid electrolyte layer and the anode current collector layer is ionized and returned to the cathode active material layer.

### Anode Current Collector Layer

The anode current collector layer may be a metal foil or a metal mesh, or may be a carbon sheet. In particular, the metal foil is preferable from the viewpoint of ease of handling. The anode current collector layer may be composed of a plurality of metal foils or sheets. When the anode current collector layer is composed of a plurality of metal foils or sheets, some layer may be present between the metal foils.

Examples of metals for the metal foil include Cu, Ni, Cr, Au, Pt, Ag, Al, Fe, Ti, Zn, Co, and stainless steel. In particular, from the viewpoint of ensuring the reduction resistance and the unlikeliness to alloy with lithium, the material preferably contains at least one metal selected from Cu, Ni, and stainless steel, particularly at least one metal out of Ni and stainless steel.

The thickness of the anode current collector layer is not particularly limited, but may be 0.1 µm or more, or 1 µm or more, and may be 1 mm or less, or 100 µm or less.

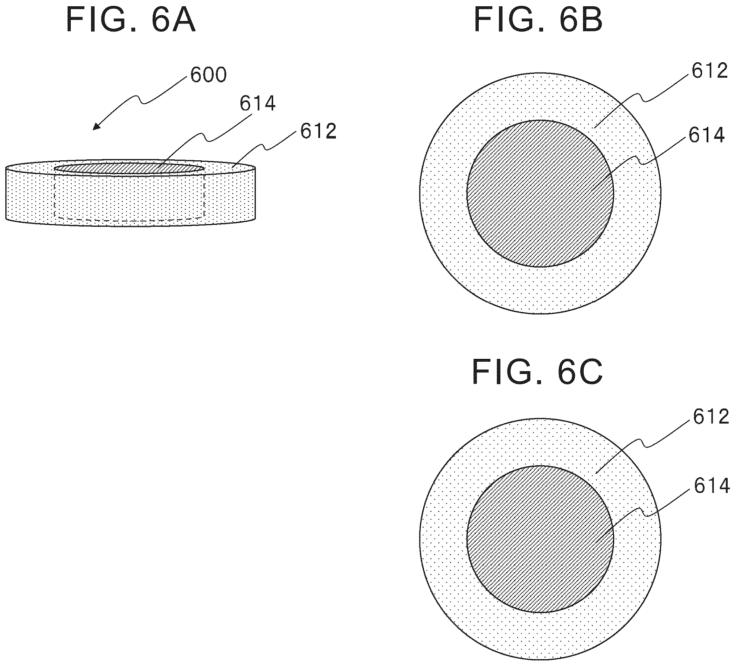

A solid electrolyte layer of an example with the configuration shown in FIGS. 1A, 1B, and 1C, solid electrolyte layers of comparative examples with the configuration shown in FIGS. 5A, 5B, and 5C, and a solid electrolyte layer of a comparative example with the configuration shown in FIGS. 6A, 6B, and 6C were produced, and the obtained solid electrolyte layers or solid-state batteries including such solid electrolyte layers were evaluated.

Specifically, the solid electrolyte layers and the solid-state batteries of the examples and the comparative examples were produced as follows.

### Production of Solid Electrolyte Layer

An acrylonitrile butadiene rubber (ABR) solution serving as a resin binder and dibutyl ether were placed in a polypropylene container and mixed for 3 minutes using a shaker. After a solid electrolyte was placed, the mixture was mixed using a shaker and an ultrasonic dispersing device, and a solvent was added as appropriate. This process was repeated until an appropriate dispersion state was achieved, thereby preparing a solid electrolyte composite slurry. Subsequently, the solid electrolyte layer composite slurry was applied onto a release film foil using a doctor blade with a coating gap of 450 µm. After visually checking that the surface was dry, the coated product was dried on a hot plate at 165°C for 1 hour.

The solid electrolyte layer was horizontally applied by an intermittent coating method using a die coater. Specifically, the coating was performed on two separate layers horizontally in concentric circles. The portion of 40% of the radius from the center was the central region, and the remaining portion was the outer peripheral region. After the coating, the coated product was dried by the same method as the blade coating. The vertical coating was performed by lamination coating. The thickness of each solid electrolyte layer after the drying was 95 µm to 100 µm. In the case of a two-layer laminate, the thickness of each solid electrolyte layer was 45 µm to 50 µm.

The solid electrolyte layers of the examples and the comparative examples obtained as described above were evaluated for ionic conductivity as described above.

### Production of Cathode Active Material Layer

Sulfur (vacuum-dried at 80°C), P₂S₅, and carbon nanotubes (diameter of 2 nm or less, vacuum-dried at 120°C) were mixed in a mortar at a weight ratio of 42:35:23, and 1.7 g of this mixture and 80 g of zirconia balls with a diameter of 4 mm were placed in each ball mill pot. Using two pots, ball mill mixing was performed in a planetary ball mill at 400 rpm for a total of 36 hours (36 sets of 1 hour of rotation and 15 minutes of rest, with reverse rotation). After the ball mill mixing, the mixture was dry classified using a 38 µm sieve to obtain a sulfur cathode composite.

Mesitylene serving as a solvent, the sulfur cathode composite, and a binder were mixed at a mass ratio of 99.7:0.3 to produce a cathode composite slurry. This cathode composite slurry was applied to a roughened aluminum foil with a gap of 220 µm, then predried at 50°C, and then fully dried at 100°C for 30 minutes to obtain a sulfide-based cathode active material layer applied to the cathode current collector foil.

### Production of Laminate Cell

The solid electrolyte layer (circular, diameter of 14.5 mm) produced as described above was pressed at 58.8 kN using a uniaxial press to obtain a self-supported film (thickness of about 70 µm). On this self-supported film, a lithium-magnesium alloy foil (containing 10% by mass of lithium, circular, diameter of 13 mm, thickness of 100 µm) serving as the anode active material layer and a roughened nickel foil (diameter of 14.5 mm) serving as the anode current collector layer were placed and lightly pressed together using a 0.1 ton press. Then, the sulfide-based cathode active material layer (diameter of 13 mm) produced above was placed on the solid electrolyte layer of the obtained laminate and sealed in a laminate material under vacuum. Then, a pressure of 300 MPa was applied using a cold isostatic press (CIP) to produce a laminate cell. This laminate cell was bound at 5 MPa and used for charging and discharging evaluation.

### Evaluation

The laminate cell obtained as described above was kept in an open circuit (OCV) state for 3 hours, and then discharged to 1.2 V at a current density of 0.584 mA/cm² equivalent to 0.1 C (1 C = 5.84 mA/cm²) and 60°C in a cutoff voltage range of 3.1 V to 1.2 V (vs. Li/Li⁺). Then, charging was performed at the same rate, and the cycle performance was examined from the voltage change.

The evaluation conditions and the evaluation results are summarized in Table 1 below. When the cycle performance was poor, the assumed cause is stated in parentheses.

**Table 1**

| | Configuration | First solid electrolyte layer | | Second solid electrolyte layer | Ionic conductivity of solid electrolyte layer | Cycle performance of solid-state battery |
|---|---|---|---|---|---|---|
| | | Outer peripheral region | Central region | | | |
| Example | FIGS. 1A, 1B, 1C | Solid electrolyte composite C | Solid electrolyte composite B | Solid electrolyte composite A | High | Good |
| Comparative Example 1 | FIGS. 5A, 5B, 5C | Solid electrolyte composite A | | - | High | Poor (cracking occurred) |
| Comparative Example 2 | FIGS. 5A, 5B, 5C | Solid electrolyte composite C | | - | Low | Poor (low ionic conductivity) |
| Comparative Example 3 | FIGS. 6A, 6B, 6C | Solid electrolyte composite C | Solid electrolyte composite B | - | High | Poor (solid electrolyte reduction) |

The solid electrolyte composites A to C used in the examples and the comparative examples were as follows.

**Table 2**

| | Ionic conductivity | Elongation at yield point | Reduction resistance |
|---|---|---|---|
| Solid electrolyte composite A (argyrodite solid electrolyte containing LiCl and LiBr, 10% by mass of binder) | Medium | Low | High |
| Solid electrolyte composite B (Li₁₀GeP₂S₁₂ solid electrolyte, 0.6% by mass of binder) | High | Low | Low |
| Solid electrolyte composite C (thio-LISICON solid electrolyte with LiI, 10% by mass of binder) | Low | High | High |

As shown in Tables 1 and 2, the solid-state battery using the solid electrolyte layer of the example exhibited good results in terms of cycle characteristics, whereas the solid-state batteries using the solid electrolyte layers of the comparative examples did not exhibit good results in terms of cycle characteristics.

## Claims

1. A solid electrolyte layer comprising a first layer (110) and a second layer (120) laminated on the first layer (110), wherein:
the first layer (110) includes an outer peripheral region (112) and a central region (114) located inward of the outer peripheral region (112) in a plane direction;
a reduction resistance of the second layer (120) is higher than a reduction resistance of the outer peripheral region (112) and a reduction resistance of the central region (114) in the first layer (110);
an elongation of the outer peripheral region (112) of the first layer (110) at a yield point is greater than an elongation of the central region (114) of the first layer (110) at a yield point and an elongation of the second layer (120) at a yield point; and
an ionic conductivity of the central region (114) of the first layer (110) is greater than an ionic conductivity of the outer peripheral region (112) of the first layer (110) and an ionic conductivity of the second layer (120).

2. The solid electrolyte layer according to claim 1, wherein the elongation of the second layer (120) at the yield point is greater than the elongation of the central region (114) of the first layer (110) at the yield point.

3. The solid electrolyte layer according to claim 1, wherein the ionic conductivity of the second layer (120) is greater than the ionic conductivity of the outer peripheral region (112) of the first layer (110).

4. A solid-state battery comprising a cathode current collector layer (310), a cathode active material layer (320) , the solid electrolyte layer according to any one of claims 1 to 3, and an anode current collector layer (340) in the stated order.

5. The solid-state battery according to claim 4, wherein:
the cathode active material layer (320) is a sulfur-based cathode active material layer; and
the solid electrolyte layer is disposed such that the first layer (110) of the solid electrolyte layer faces the cathode active material layer (320) and the second layer (120) of the solid electrolyte layer faces the anode current collector layer (340).
